# EUROPÄISCHE PATENTSCHRIFT

(11) **EP 0 699 560 B1**
(45) Veröffentlichungstag und Bekanntmachung des Hinweises auf die Patenterteilung: **20.01.1999**
(21) Anmeldenummer: 95112132.6
(22) Anmeldetag: 02.08.1995
(51) Int. Cl.: B60Q 1/22

(54) **Rückfahrscheinwerfer für Strassenfahrzeuge**
Reversing light for vehicle
Phare de recul pour véhicule

(30) Priorität: 01.09.1994 DE 4431033; 24.10.1994 DE 4437987
(43) Veröffentlichungstag der Anmeldung: 06.03.1996
(73) Patentinhaber: HAPPICH Fahrzeug- und Industrieteile GmbH, 42285 Wuppertal (DE)
(72) Erfinder: Baader, Hans Joachim, D-42329 Wuppertal (DE); Lantzsch, Klaus, D-99819 Stockhausen (DE)

(56) Entgegenhaltungen:
- EP-A- 0 454 934
- WO-A-92/01586
- CA-A- 1 298 897
- DE-A- 3 225 407
- DE-U- 9 410 328
- ABSTRACT DISCLOSURE, Nr. 350, Juni 1993, EMSWORTH, XP000373016 "tail lamp with integral blindzone radar"

## Beschreibung

Die Erfindung bezieht sich auf einen Rückfahrscheinwerfer für Straßenfahrzeuge, der mit einem durch Einschalten des Rückfahrscheinwerfers aktivierbaren Signalgeber gekoppelt und mit diesem als eine Baueinheit ausgebildet ist, wobei der Signalgeber ein akustischer Signalgeber ist. Ein solcher Rückfahrscheinwerfer ist aus der WO-A-92 01 586 bekannt.

Rückfahrscheinwerfer gehören zur Serienausstattung von Straßenfahrzeugen und werden durch das Einlegen des Rückwärtsgangs eines Fahrzeugs, sofern die Zündung eingeschaltet ist, automatisch in Betrieb genommen. Die Erfindung macht sich diesen Umstand (wie auch schon in der WO-A-92 01 586 beschrieben) zunutze, indem sie den Rückfahrscheinwerfer mit einem der Sicherheit im Straßenverkehr dienenden weiteren Funktionselement ausrüstet oder koppelt.

Das Zurücksetzen, Rückwärtsfahren und Rangieren mit einem Fahrzeug stellt im alltäglichen Straßenverkehr ein nicht zu unterschätzendes Unfallrisiko dar. Während bei Personenkraftfahrzeugen aufgrund der relativ großen Fensterflächen der freie Blick nach hinten in der Regel ausreichend gegeben ist, sieht die Situation bei geschlossenen Fahrzeugen, wie Lastkraftwagen, Kleintransporter, Lieferwagen, Zugmaschinen oder auch Bussen völlig anders aus. Solche Straßenfahrzeuge, auf die die Erfindung insbesondere abzielt, sind aber im innerstädtischen Bereich, während zulässiger Ladezeiten auch in Fußgängerbereichen sehr häufig anzutreffen und stellen, wie die Unfallstatistik zeigt, ein großes Gefahrenpotential dar. Immer wieder ist in Zeitungsberichten, Polizei- oder Versicherungsprotokollen nachzulesen, daß Passanten durch zurücksetzende oder rangierende Fahrzeuge zu Schaden gekommen sind, wobei auch Todesfälle beklagt werden müssen. Der Blick nach hinten ist für die Fahrzeuglenker bei Fahrzeugen mit geschlossenem Aufbau nur durch die Außenspiegel gegeben, die aber den Bereich hinter den Aufbauten nicht abdecken. Obgleich sich die meisten Fahrzeuglenker vor dem Zurücksetzen des Fahrzeugs davon überzeugen, daß sich hinter dem Fahrzeug keine Passanten befinden, kommt es immer wieder zu manchmal auch tragisch endenden Unfällen, weil plötzlich hinter dem Fahrzeug doch Passanten auftauchen, die angefahren werden können und nicht selten angefahren werden. Möglicherweise ist gerade das langsame und vorsichtige Rücksetzen und Rangieren der Grund für die Unfallhäufigkeit, weil viele Menschen sich vor langsam z. B. im Schrittempo bewegenden Fahrzeugen nicht in acht nehmen oder gar nicht bemerken, daß sich ein Fahrzeug rückwärts bewegt.

Der vorliegenden Erfindung liegt nun die Aufgabe zugrunde, einen Beitrag zur Erhöhung der Verkehrssicherheit zu leisten, und zwar in bezug auf die geschilderte Problemstellung, die sich durch ein Zurücksetzen und Rangieren von Fahrzeugen, insbesondere in innerstädtischen Bereichen ergibt und dieserhalb einen Rückfahrscheinwerfer zur Verfügung zu stellen, der Mittel aufweist, zumindest aber mit Mitteln gekoppelt ist, die Passanten vor der Gefahr eines zurücksetzenden Fahrzeugs aufmerksam machen.

Zur Lösung dieser Aufgabe wird erfindungsgemäß ein Rückfahrscheinwerfer für Straßenfahrzeuge, wie insbesondere Busse, Lastkraftwagen, Kleintransporter, Lieferwagen und Zugmaschinen vorgeschlagen, der sich dadurch auszeichnet, daß der Signalgeber nach Art eines Sprachcomputers, ggf. auch mehrsprachig ausgebildet ist, daß der Signalgeber darüber hinaus geeignet ist, neben den akustischen Signalen auch optisch wahrnehmbare Signale zu senden und hierfür mit einem Leuchtring aus transparentem oder eingefärbtem lichtdurchlässigem Material für ein rotierendes Licht- bzw. Leuchtsignal ausgebildet ist und daß schließlich im Scheinwerfergehäuse des Rückfahrscheinwerfers zusätzlich ein durch Einlegen des Rückwärtsgangs des Fahrzeugs aktivierbarer Abstandswarner angeordnet ist.

Die Kombination eines Rückfahrscheinwerfers mit einem Signalgeber bietet den besonderen Vorteil, daß das Einschalten des Signalgebers nicht vergessen werden kann, weil sein Einschalten durch das automatische Einschalten des Rückfahrscheinwerfers beim Rückwärtsfahren eines Fahrzeugs ebenso automatisch mit erfolgt. Für den akustischen, nach Art eines Sprachcomputers ausgebildeten Signalgeber kann ein Chip vorgesehen sein, der mehrsprachig gespeichert ist. Ein solcher Signalgeber kann z. B. in immer wiederkehrender Folge den Sprachtext "Vorsicht Fahrzeug setzt zurück" von sich geben. Dadurch, daß der Signalgeber geeignet ist, auch optisch wahrnehmbare Signale auszusenden, wird dem Umstand Rechnung getragen, daß es auch gehörlose Passanten gibt. Durch die Maßanahme im Scheinwerfergehäuse zusätzlich einen durch Einlegen des Rückwärtsgangs des Fahrzeugs aktivierbaren Abstandswarner (Hindernismelder) anzuordnen, wird die Erfindung vervollkommnet.

Der Signalgeber kann als modulares Bauelement ausgebildet und innerhalb des Scheinwerfergehäuses angeordnet sein. In diesem bevorzugten Fall ist dann der Rückfahrscheinwerfer mit Schallaustrittsöffnungen versehen, die sich im Scheinwerfergehäuse, in einer separaten Deckelplatte oder auch im Lampenglas befinden können.

Der Rückfahrscheinwerfer ist mit einem Leuchtring aus transparentem oder eingefärbtem lichtdurchlässigem Material für ein rotierendes Licht- bzw. Leuchtsignal ausgebildet. Ein solcher Leuchtring kann im Lampenglas eingearbeitet sein oder auch als gesondert gefertigtes Bauteil das Scheinwerfergehäuse an der Peripherie umgeben.

Ein Ausführungsbeispiel der Erfindung wird im folgenden anhand der Zeichnungen weiter erläutert, und es zeigen:
- Fig. 1: den Rückfahrscheinwerfer in einer Vorderansicht,
- Fig. 2: den Rückfahrscheinwerfer in Draufsicht
- Fig. 3: den Rückfahrscheinwerfer in schaubildlicher Darstellungsmanier und
- Fig. 4: eine schaubildliche Gesamtansicht des Rückfahrscheinwerfers.

Der Rückfahrscheinwerfer besteht aus einem Scheinwerfergehäuse 1, in dem eine Rückfahrscheinwerfer-Beleuchtungseinrichtung mit einer üblichen Lichtquelle 2, einem Reflektor 3 und einem Scheinwerferglas 4 angeordnet ist. Das Scheinwerfergehäuse 1 nimmt darüber hinaus auch einen akustischen Signalgeber 5, bei dem es sich um ein Signalgeber-Modul handelt auf. Der Aufbau des Signalgebers 5, wie auch die elektrisch leitende Verbindung der Rückfahrscheinwerfer-Beleuchtungseinrichtung mit dem Signalgeber ist im einzelnen nicht dargestellt.

Die Frontscheibe des Scheinwerfergehäuses 1 ist zum einen durch das erwähnte Scheinwerferglas und zum anderen durch eine Platte 6 mit Schallaustrittsöffnungen 7 abgedeckt.

Am Scheinwerfergehäuse 1 ist eine übliche Befestigungsvorrichtung 8 angeordnet, mittels der der Rückfahrscheinwerfer an einem Fahrzeug zu befestigen ist.

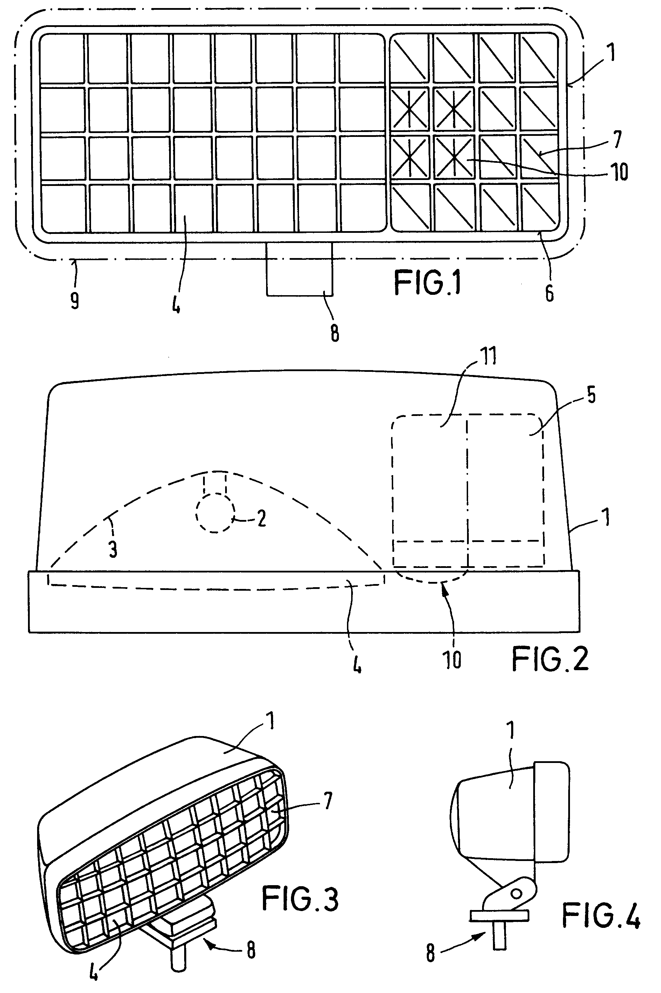

Fig. 1 zeigt mit strichpunktierter Linie einen Leuchtring 9, der das Scheinwerfergehäuse 1 umgibt und aus einem transparenten oder eingefärbten Glas- oder Kunststoffmaterial bestehen kann. In dem Leuchtring kann ein z. B. über ein Relais gesteuertes Licht- bzw. Leuchtsignal als optischer Signalgeber rotieren.

Neben dem akustischen Signalgeber 5 befindet sich im Scheinwerfergehäuse 1 zumindest ein Überwachungssensor 10 eines insgesamt mit 11 bezeichneten Abstandswarners, wobei zu beachten ist, daß die Zeichnung diesen und dessen Anordnungen mehr in schematischer Darstellungsmanier andeuten soll. Der Abstandswarner 11 ist praktisch ein Hindernismelder für den rückwärtigen Rangierbereich eines Fahrzeugs, der zumindest einen Überwachungssensor 10 (im Scheinwerfergehäuse 1 angeordnet), zumindest eine optische Anzeige und einen, vorzugsweise im Fahrerhaus angeordneten Signaltongeber sowie elektrische Verbindungskabel umfaßt.

Der Abstandswarner 11 kontrolliert ständig den hinteren Rangierbereich während des Rückwärtsfahrens und meldet dem Fahrer durch optische Anzeigen und akustische Warnsignale Position und Abstand von Hindernissen und Gefahren, und zwar punktgenau und zuverlässig, bei Tag und Nacht, bei Wind und Wetter. Der Abstandswarner 11 wird durch Einlegen des Rückwärtsganges aktiviert und checkt sich automatisch durch. Er erfaßt durch seine Sensoren 10 Hindernisse jeder Form und jeden Materials, erkennt mehrere Hindernisse gleichzeitig und meldet den Abstand zum nächstliegenden. Der Fahrer sieht in seinen Seitenspiegeln die optischen Anzeigen, die z. B. am Heck angeordnet sein können, die ihn vor Hindernissen im Rangierbereich warnen. Ein Signalton, vorzugsweise im Fahrerhaus unterstützt das optische Signal.

## Patentansprüche

1. Rückfahrscheinwerfer für Straßenfahrzeuge, der mit einem durch Einschalten des Rückfahrscheinwerfers aktivierbaren Signalgeber (5) gekoppelt und mit diesem als eine Baueinheit ausgebildet ist, wobei der Signalgeber (5) ein akustischer Signalgeber ist, dadurch gekennzeichnet, daß der Signalgeber (5) nach Art eines Sprachcomputers, ggf. auch mehrsprachig ausgebildet ist, daß der Signalgeber (5) darüber hinaus geeignet ist, neben den akustischen Signalen auch optisch wahrnehmbare Signale zu senden und hierfür mit einem Leuchtring (9) aus transparentem oder eingefärbtem lichtdurchlässigem Material für ein rotierendes Licht- bzw. Leuchtsignal ausgebildet ist und daß schließlich im Scheinwerfergehäuse (1) des Rückfahrscheinwerfers zusätzlich ein durch Einlegen des Rückwärtsgangs des Fahrzeugs aktivierbarer Abstandswarner (11) angeordnet ist.

2. Rückfahrscheinwerfer nach Anspruch 1, dadurch gekennzeichnet, daß der Signalgeber (5) als modulares Bauelement ausgebildet und innerhalb des Scheinwerfergehäuses (1) angeordnet ist.

3. Rückfahrscheinwerfer nach Anspruch 1 oder 2, dadurch gekennzeichnet, daß derselbe Schallaustrittsöffnungen (7) aufweist.

## Claims

1. Reversing light for road vehicles, which is coupled to a signal generator (5), which can be activated by switching-on of the reversing light, and is designed together with said signal generator as a constructional unit, the signal generator (5) being an acoustic signal generator, characterized in that the signal generator (5) is designed in the manner of a speaking computer, if appropriate also being multilingual, in that the signal generator (5) is moreover suitable, in addition to the acoustic signals, also to transmit visually perceivable signals and, for this purpose, is designed with an illuminating ring (9) made of transparent material or opaque coloured material for a rotating light or illuminating signal, and in that finally in the reversing-light housing (1) there is additionally arranged a distance warning light (11) which can be activated by putting the vehicle into reverse gear.

2. Reversing light according to Claim 1, characterized in that the signal generator (5) is designed as a modular component and is arranged within the light housing (1).

3. Reversing light according to Claim 1 or 2, characterized in that it has sound-outlet openings (7).

## Revendications

1. Feu de recul pour véhicules routiers, qui est couplé à un générateur de signaux (5) qui peut être activé par l'allumage du feu de recul et forme, avec celui-ci, un ensemble, le générateur de signaux (5) étant un générateur de signaux acoustiques, caractérisé en ce que le générateur de signaux (5) est conçu sous la forme d'un ordinateur doté de parole, le cas échéant également multilingue, en ce que le générateur de signaux (5) est en outre à même d'émettre, en plus des signaux acoustiques, des signaux perceptibles optiquement et est formé à cet effet avec un anneau lumineux (9) en un matériau transparent ou en un matériau coloré translucide en vue d'un signal lumineux ou luminescent tournant, et en ce que, finalement, un avertisseur de distance (11) pouvant être activé par l'enclenchement de la marche arrière du véhicule est disposé en outre dans le boîtier (1) du feu de recul.

2. Feu de recul suivant la revendication 1, caractérisé en ce que le générateur de signaux (5) a la forme d'un composant modulaire et est disposé à l'intérieur du boîtier (1) du feu de recul.

3. Feu de recul suivant la revendication 1 ou 2, caractérisé en ce qu'il présente des ouies (7).
